Europäisches Patentamt

European Patent Office

Office européen des brevets

(19)

(11) Veröffentlichungsnummer : **0 103 309**
**B1**

(12) **EUROPÄISCHE PATENTSCHRIFT**

(45) Veröffentlichungstag der Patentschrift :
30.12.86

(21) Anmeldenummer : 83109142.6

(22) Anmeldetag : 15.09.83

(51) Int. Cl.⁴ : **C 08 G 18/64**, C 08 G 18/32,
C 09 D 3/72, E 04 F 13/02,
E 04 B 1/66, C 08 G 18/08

(54) 1-Komponenten-Beschichtungsmasse, deren Verwendung, und Verfahren zur Erzeugung eines Schutzüberzuges.

(30) Priorität : 15.09.82 DE 3234261
15.09.82 DE 3234262

(43) Veröffentlichungstag der Anmeldung :
21.03.84 Patentblatt 84/12

(45) Bekanntmachung des Hinweises auf die Patenterteilung : 30.12.86 Patentblatt 86/52

(84) Benannte Vertragsstaaten :
AT BE CH DE FR GB IT LI LU NL SE

(56) Entgegenhaltungen :
DE-A- 2 848 720
DE-B- 1 044 323
FR-A- 2 426 703
US-A- 3 420 915
US-A- 3 994 735
FARBE UND LACK, Band 83, Nr. 8, August 1977,
Seiten 701-705, Hannover (DE); B. RIBERI: "Kombinationen von Steinkohlenteer mit Polyurethanen".

(73) Patentinhaber : Metallogal AG
Bubenbergplatz 8
CH-3000 Bern (CH)

(72) Erfinder : Meyer, Rainer Leo
Sommerbergstrasse 28
D-7580 Bühl (DE)
Erfinder : Reinmar, John
Zur Friedrichshöhe 37
D-7590 Achern-II (DE)
Erfinder : Nagel, Rolf
Schartenbergstrasse 42c
D-7570 Baden-Baden 23 (DE)
Erfinder : Müller, Günter
Rösselweg 6-7
D-7591 Obersasbach (DE)

(74) Vertreter : Vogeser, Werner, Dipl.-Ing. et al
Patentanwälte Hansmann & Vogeser Albert-Rosshaupter-Strasse 65
D-8000 München 70 (DE)

## Beschreibung

Die Erfindung betrifft Beschichtungsmassen, die wegen ihres Gehaltes an polyurethanbildendem Isocyanat chemisch härtend sind. Insbesondere betrifft die Erfindung 1-Komponenten-Beschichtungsmassen dieser Art, die im fertig abgemischten Zustand bei Feuchtigkeitsausschluß lagerbeständig sind, jedoch nach Feuchtigkeitszutritt aushärten. Weiterhin betrifft die Erfindung ein Verfahren zur Erzeugung eines Schutzüberzuges mit derartigen Beschichtungsmassen, und verschiedene Anwendungsmöglichkeiten. Die Beschichtungsmassen sind insbesondere zum Bautenschutz geeignet, etwa zum Schutz von Dächern aller Art, zum Abdichten von mit Teerpappe abgedeckten Flachdächern, zur Beschichtung von Beton- und/oder zum Korrosionsschutz von Stahlbeton.

Beschichtungsmassen zum Bautenschutz sind bekannt. Zu bekannten Präparaten gehören beispielsweise wasserverdünnbare Acrylate, die jedoch in mehreren Schichten aufgetragen werden mußten, und in der Praxis keinen befriedigenden Schutz boten. Eine weitere bekannte Beschichtungsmasse besteht aus einem 2-Komponenten-Epoxydharzsystem, dessen Verarbeitbarkeit jedoch nur unter bestimmten Bedingungen für Temperatur und Luftfeuchtigkeit möglich war, und bei dem Schwierigkeiten hinsichtlich der Topfzeit auftraten. Weiterhin sind Beschichtungsmassen auf der Basis von Kombinationen von Steinkohlenteer mit Polyurethanen bekannt (vgl. « Farbe und Lack », 83, S. 701-705 (1977)). Steinkohlenteer ist typischerweise durch seine schwarze Farbe und seine klebrige Konsistenz gekennzeichnet und besteht praktisch ausschließlich aus aromatischen Verbindungen, die neben Kohlenstoff und Wasserstoff einen gewissen Prozentsatz an Fremdatomen wie Sauerstoff, Stickstoff und Schwefel enthalten. Ein Teil dieser Heteroatome liegt in Hydroxyd- und Aminogruppen vor, weshalb solcher Teer aktive Wasserstoffatome enthält, die mit Isocyanatgruppen reagieren können. Typischerweise stellen deshalb Abmischungen aus Steinkohlenteer und polyurethanbildendem Isocyanat keine 1-Komponenten-Beschichtungsmassen dar.

Allgemein kann gesagt werden, daß die bekannten Beschichtungsmassen zur Verarbeitung eine Lufttemperatur oberhalb 10 °C und eine relative Luftfeuchtigkeit unter 80 % erfordern. Zur Erzielung eines brauchbaren Schutzes müssen die bekannten Beschichtungsmassen wenigstens in einer Menge von 170 g/m² pro Schicht aufgetragen werden. Auch unter Einhaltung dieser Randbedingungen haben die bekannten Beschichtungsmassen nicht völlig befriedigt ; im praktischen Gebrauch traten insbesondere die nachstehenden Schwierigkeiten auf :

die Diffusionsfreudigkeit der Beschichtungsmasse war unzureichend ;

die Beschichtungsmasse mußte mindestens zweimal appliziert werden ;

der ausgehärtete Schutzanstrich wies nur eine geringe Elastizität auf ;

wegen seiner zu starken Verwitterung war die Überarbeitbarkeit des Schutzanstriches schlecht ;

im Laufe der Zeit trat eine starke Auskreidung auf (weshalb die einschlägigen Bestimmungen für jene bekannten Systeme eine Erneuerung nach mindestens fünf Jahren vorsehen) ;

die Beschichtungsmasse darf nur bei gutem, trockenem Wetter aufgebracht werden ;

der fertige Schutzüberzug weist nur eine geringe Porendichtigkeit auf ;

die bekannten Steinkohlenteer/polyurethanbildendes Isocyanat-Abmischungen weisen notwendigerweise die mit Steinkohlenteer verbundenen Nachteile auf, wie schwarze Farbe, Teerdurchblutungen bei Überbeschichtung und Zersetzung der Steinkohlenteer-Anteile durch UV-Strahlung.

Davon ausgehend besteht die Aufgabe der vorliegenden Erfindung darin, eine bei Feuchtigkeitszutritt aushärtende 1-Komponenten-Beschichtungsmasse für den Bautenschutz bereitzustellen, welche wenigstens hinsichtlich einiger, vorzugsweise jedoch aller oben genannten Schwierigkeiten und Nachteile der bekannten Systeme deutliche Verbesserungen ergibt.

Die erfindungsgemäße Lösung obiger Aufgabe ist eine Beschichtungsmasse der in Anspruch 1 angegebenen Zusammensetzung.

Im Gegensatz zum bekannten Steinkohlenteer stellt das erfindungsgemäß vorgesehene Kohlenwasserstoffharz ein farbloses bis leicht gelbliches Öl dar, so daß die erfindungsgemäße Zusammensetzung farbklare und helle, sogar weiße Beschichtungen ergibt, die dennoch die vorteilhaften « Polyurethan/Steinkohlenteer-Beschichtungseigenschaften » aufweisen. Die erfindungsgemäß erhältlichen hellen Beschichtungen erwärmen sich unter Sonneneinstrahlung weniger und werden unter UV-Strahlung wesentlich weniger stark abgebaut als die bekannten, Steinkohlenteer enthaltenden Überzüge.

Weiterhin ist Gegenstand der Erfindung ein Verfahren zur Erzeugung eines Schutzüberzuges, wobei man die erfindungsgemäße 1-Komponenten-Beschichtungsmasse auf einem sauberen Untergrund aufbringt und unter Feuchtigkeitszutritt aus der umgebenden Atmosphäre aushärten läßt.

Weil die erfindungsgemäße Beschichtungsmasse als 1-Komponenten-System konfektioniert ist, kann sie praktisch unter Feuchtigkeitsausschluß unbegrenzt gelagert werden, und härtet dennoch nach Aufbringung auf dem vorgesehenen Untergrund durch Zutritt von Luftfeuchtigkeit aus der umgebenden Atmosphäre innerhalb von etwa 10-30 Min. aus, so daß bereits nach ca. 30 Min. bei Bedarf eine oder mehrere weitere Schicht(en) aufgebracht werden kann. Nach ca.

15-20 Std. ist der gesamte Schutzüberzug völlig ausgehärtet, und kann der vorgesehenen Belastung ausgesetzt werden.

Die erfindungsgemäße Beschichtungsmasse eignet sich ganz allgemein zur Erzeugung von Schutzüberzügen für den Bautenschutz. Bevorzugte Anwendungen betreffen den Schutz von Dächern aller Art, einschließlich der Abdichtung von mit Teerpappe eingedeckten Flachdächern, ferner die Beschichtung von Beton und den Korrosionsschutz von Stahlbeton.

Vorteilhafte Ausgestaltungen und Weiterbildungen der Erfindung ergeben sich aus den Unteransprüchen.

Die erfindungsgemäße Beschichtungsmasse gewährleistet die nachstehend stichwortartig aufgeführten Vorteile und Besonderheiten :

die Beschichtungsmasse ist noch bei Temperaturen kleiner 5 °C verarbeitbar ;

die Beschichtungsmasse ist auch bei relativ hoher Luftfeuchtigkeit, beispielsweise größer 90 % verarbeitbar ;

die Beschichtungsmasse ist selbstverlaufend ;

der aus der Beschichtungsmasse hergestellte Überzug bietet hervorragenden Schutz gegen ultraviolette Strahlung ;

der fertige Schutzüberzug weist gute Reflexionswerte bezüglich Licht und Wärmestrahlung auf ;

selbst bei geringen Schichtdicken, beispielsweise in der Größenordnung von lediglich 50 μm weist der fertige Schutzüberzug hohe Porendichtigkeit auf ;

der fertige Schutzüberzug besitzt gute Elastizität und hohe Haftfestigkeit ;

auch nach Bewitterung ist die Überarbeitbarkeit des Schutzüberzuges problemlos gegeben ;

zur Aufbringung der Beschichtungsmasse ist lediglich eine übliche einfache Untergrundvorbehandlung erforderlich ;

der Schutzüberzug ist flammwidrig ; und

auch in hohen Schichtdicken, beispielsweise größer 200 μm tritt beim Aushärten keine Rißbildung des Schutzüberzuges auf.

Nachstehend wird die Erfindung im einzelnen mit Bezugnahme auf bevorzugte Ausführungsformen erläutert.

Die erfindungsgemäße Beschichtungsmasse ist gekennzeichnet durch einen Gehalt an den nachfolgend aufgeführten, notwendigen Bestandteilen in den angegebenen Anteilen :

15 bis 70 Gew.-% polyurethanbildendes Isocyanat ;

5 bis 25 Gew.-% helles, flüssiges, OH-Gruppenhaltiges niedermolekulares, aromatisches Kohlenwasserstoffharz ;

0,2 bis 2 Gew.-% Anti-Absetzmittel ;

10 bis 35 Gew.-% blättchenförmige Extender ;

2 bis 25 Gew.-% farbgebende Pigmente ;

1 bis 5 Gew.-% feuchtigkeitsbindendes Mittel, Rest, jedoch wenigstens 5 Gew.-% übliches Lacklösungsmittel.

Zusätzlich zu den aufgeführten notwendigen Bestandteilen kann die erfindungsgemäße Beschichtungsmasse in der Lacktechnologie übliche und gebräuchliche Additive und Zusätze enthalten, beispielsweise anti-bakteriell oder antifungizid wirkende Wirkstoffe, den Abbau durch Licht, Wärme, und/oder korrosive Einflüsse hemmende Additive, und sonstige, gebräuchliche an spezielle Anforderungen angepaßte Zusätze (beispielsweise zur Unterdrückung der Blasenbildung) oder tropffest machende Mittel.

Als polyurethanbildendes Isocyanat kommen die bekannten Diisocyanate, Triisocyanate und niedermolekularen Polyisocyanate in Betracht, beispielsweise die unter der Handelsbezeichnung « Desmodur » vertriebene Gruppe von Isocyanaten. Gute Ergebnisse wurden beispielsweise mit Toluylendiisocyanaten erzielt, wobei sowohl 2.4- wie 2.6-Toluylendiisocyanat oder das handelsübliche Isomerengemisch eingesetzt werden kann. Weiterhin kann als polyurethanbildendes Isocyanat Diphenylmethan-4.4'-diisocyanat oder Hexamethylen-1.6-diisocyanat eingesetzt werden.

Als weiteren wesentlichen Bestandteil enthält die erfindungsgemäße Beschichtungsmasse ein flüssiges, OH-Gruppenhaltiges, aromatisches Kohlenwasserstoffharz. Im Gegensatz zum bekannten Teer, insbesondere Steinkohlenteer, handelt es sich bei dem erfindungsgemäß vorgesehenen Kohlenwasserstoffharz um ein helles, d. h. farbloses bis leicht gelbliches Material mit einer Helligkeit nach Barrett von 0,5 bis 2.

Das Kohlenwasserstoffharz ist flüssig und weist beispielsweise bei 25 °C eine Viskosität zwischen 700 und 2 000 cP auf.

Bei diesem Harz handelt es sich um ein niedermolekulares, aromatisches Material, mit einem mittleren Molekulargewicht unter 600. Die Dichte dieses Kohlenwasserstoffharzes hat bei 20 °C einen Wert zwischen 1,0 und 1,2 g/cm$^3$.

Die Säurezahl des Kohlenwasserstoffharzes liegt vorzugsweise zwischen etwa 0,2 und 3,0.

Das Kohlenwasserstoffharz muß notwendigerweise einen gewissen Anteil an OH-Gruppen aufweisen. Vorzugsweise handelt es sich um aromatische Hydroxylgruppen, die aus einer vorausgegangenen « Phenolmodifizierung » bzw. « Aktivierung » resultieren. Vorzugsweise weist das Kohlenwasserstoffharz einen Gehalt an OH-Gruppen, insbesondere an aromatischen OH-Gruppen von 2,0 bis 4,0 %, bezogen auf das Gewicht des Harzes auf.

Das Kohlenwasserstoffharz ist vorzugsweise wasserfrei und lösungsmittelfrei ; sein Anteil an flüchtigen Bestandteilen liegt unter 10 % und kann bei bestimmten handelsüblichen Produkten etwa 5 bis 8 Gew.-% ausmachen.

Kohlenwasserstoffharze dieses Typs sind in der Fachwelt bekannt und werden vom Fachhandel speziell auch für die Bedürfnisse der Lackindustrie angeboten. Zur Beschreibung dieser Materialien werden in der Fachwelt auch die Bezeichnungen « lichtbeständiger Spezialteer », « Albino-Teer » und dergleichen verwendet. Beispielsweise können im Rahmen der vorliegenden Erfindung als Kohlenwasserstoffharz Materialien verwendet werden, die von der Firma VFT-Vertriebsgesellschaft für Teererzeugnisse mbH, Essen, Bundesrepublik Deutschland, unter der Produktbezeichnung « aktivierte VFT Spezial-Flüssigharze » vertrieben werden.

Anti-Absetzmittel für Beschichtungsmassen der hier betrachteten Art sind in der Fachwelt bekannt ; zu bekannten und im Rahmen der vorliegenden Erfindung brauchbaren Anti-Absetzmitteln gehören beispielsweise Montmorillonite, Kieselsäure, hydriertes Rizinusöl und dergleichen.

Blättchenförmige Extender bzw. Füllstoffe sind ebenfalls bekannt. Zu bekannten und im Rahmen der vorliegenden Erfindung brauchbaren blättchenförmigen Extendern gehören beispielsweise Talkum, Bariumsulfat, Schuppenpigmente auf der Basis von Si/Al-Oxyden und vergleichbare Füllstoffe. Die erfindungsgemäß vorgesehenen Extender sollen arm und vorzugsweise frei an Carbonat und/oder $CO_2$-abspaltenden Komponenten sein, um im Gemisch mit Polyisocyanat eine hohe Lagerstabilität zu gewährleisten.

Auch farbgebende Pigmente für Beschichtungsmassen der hier betrachteten Art sind bekannt. Sie gewährleisten insbesondere das Licht- und Wärmereflexionsvermögen des Schutzanstriches und verleihen diesem eine bestimmte Farbe. Geeignete farbgebende Pigmente sind beispielsweise unter den Handelsbezeichnungen « Sicominpigmente », « Heliogenpigmente », « Litholpigmente » und dergleichen handelsüblich zugänglich.

Nach einem weiteren Gesichtspunkt der Erfindung soll wenigstens ein Teil der « farbgebenden » Pigmente aus Aluminiumpulver bestehen ; vorzugsweise ist blättchenförmiges Aluminiumpulver mit einer Flächenausdehnung kleiner als 45 μm vorgesehen. Der Aluminiumanteil macht vorzugsweise 20 bis 80 % des Gewichts der farbgebenden Pigmente aus ; besonders bevorzugt enthält die Beschichtungsmasse 1 bis 6 % Aluminiumpigment, bezogen auf das Gesamtgewicht der Beschichtungsmasse.

Als feuchtigkeitsbindende bzw. feuchtigkeitsentziehende Mittel kommen feinteilige, natürliche und synthetische Zeolithe (beispielsweise die von Bayer AG vertriebene Zeolith 1-Paste), ferner Molekularsiebe aus Aluminiumoxyd- und Siliziumoxydverbindungen, gegebenenfalls mit einem Zusatz von Titan, in Betracht. Weiterhin können auf chemischem Wege wasserbindende Mittel vorgesehen werden, wie etwa Monoisocyanate. Derartige feuchtigkeitsbindende bzw. feuchtigkeitsentziehende Mittel sind ebenfalls handelsüblich zugänglich.

Als Lacklösungsmittel kommen die bekannten Lösungsmittel und Lösungsmittelgemische in Betracht. Gut bewährt haben sich beispielsweise handelsüblich zugängliche Aromatengemische mit einem Molekulargewicht von 100 bis 200. Weiterhin können die in der Lackindustrie üblichen Lösungsmittel auf der Basis aliphatischer Ester, etwa Acetate, Propionate und/oder Butylate eingesetzt werden ; höhere Ester sind weniger zweckmäßig, weil dann eine zu lange Trockungszeit resultiert.

Die Herstellung der erfindungsgemäßen Beschichtungsmasse kann nach in der Lackindustrie üblichen Techniken erfolgen. Zumeist werden die Komponenten in den vorgesehenen Anteilen in einen Kessel gegeben und mittels eines Schnellrührers bzw. Disolvers vermischt. Hierbei hat es sich gut bewährt, das Gemisch aus polyurethanbildendem Isocyanat und Kohlenwasserstoffharz vorzulegen, und daraufhin die restlichen Bestandteile nacheinander zuzugeben, wobei das feuchtigkeitsbindende Mittel zum Schluß zugegeben wird. Gut bewährt hat sich eine Rührdauer von 10 bis 20 Min. bei Raumtemperatur. Erfahrungsgemäß kann eine leichte Erwärmung beispielsweise bis auf etwa 40 °C auftreten, die jedoch kaum auf Reaktionswärme, sondern auf die auftretenden Scherkräfte zurückzuführen ist. Schließlich wird das Lösungsmittel in der erforderlichen Menge zugesetzt, um die Verarbeitbarkeit der Masse zu sichern, und daraufhin nochmals kurz durchgemischt. Danach erhält man eine selbstverlaufende, strukturviskose Masse, die in dieser Form einsatzbereit ist.

Bei Bedarf kann die Beschichtungsmasse gelagert werden, wobei die Lagerfähigkeit bei Raumtemperatur wenigstens 6 Monate beträgt. Einzelne Proben sind ohne erkennbare Viskositätszunahme und/oder Reaktivitätsabnahme bereits mehr als 12 Monate gelagert worden.

Weil die erfindungsgemäße Beschichtungsmasse ein 1-Komponenten-System darstellt, ist keine nennenswerte Topfzeit gegeben. Das Material soll nach dem Öffnen des Lagerbehälters zügig verarbeitet werden, ansonsten tritt Hautbildung und langsame Durchreaktion durch Zutritt von Luftfeuchtigkeit auf.

Die Aufbringung der Beschichtungsmasse auf dem vorgesehenen Untergrund kann nach üblichen Verfahren erfolgen, beispielsweise mittels einer Rolle oder durch Aufspritzen ; gut bewährt hat sich beispielsweise das mit hohem Druck arbeitende Airles-Spritzverfahren.

Die Beschichtungsmasse wird in einer Schichtdicke von wenigstens 20 μm auf dem vorgesehenen Untergrund aufgebracht ; vorzugsweise ist eine Schichtdicke von etwa 50 bis 70 μm vorgesehen. Es ist weiterhin möglich, mehrere Schichten übereinander aufzubringen, nachdem die vorangegangene Schicht weitgehend durchgehärtet ist. Eine 45 μm dicke Schicht trocknet beispielsweise unter Umgebungsbedingungen nach etwa 15 Min. und ist nach etwa 30 Min. überarbeitbar, so daß eine oder weitere Schicht(en) aufgebracht werden kann (können). Nach ca. 18 Std. ist der Schutzüberzug völlig ausgehärtet und fest und kann der vorgesehenen Belastung ausgesetzt werden. Nach Bewitterung und/oder Alterung, auch über einen Zeitraum von einem Jahr und länger, ist der aus der erfindungsgemäßen Beschichtungsmasse erhaltene Film ohne weiteres mit dem gleichen Material erneut beschichtbar.

Die Vorbereitung des Untergrundes erfordert keine besonderen Maßnahmen ; es ist ausreichend, wenn der Untergrund schmutz- und staubfrei ist, was durch einfaches Abkehren erreicht werden kann. Besondere Anforderungen an die Trockenheit des Untergrundes bestehen nicht. Die erfindungsgemäße Beschichtungsmasse kann auch auf feuchter, jedoch noch nicht nasser Fläche aufgebracht werden, ohne daß dadurch das Aushärten und Abbinden sowie die Qualität des fertigen Schutzüberzuges beeinträchtigt werden.

Nach dem Auftrag der Beschichtungsmasse auf dem Untergrund härtet diese unter Zutritt der Feuchtigkeit aus der umgebenden Atmosphäre selbsttätig aus, ohne daß besondere Maßnahmen erforderlich wären.

Nach einem weiteren Gesichtspunkt der Erfindung ist eine feuchtigkeitshärtende 1-Komponenten-Beschichtungsmasse vorgesehen, die im Rahmen der oben angegebenen Zusammensetzung einen relativ geringen Gehalt an polyurethanbildendem Isocyanat aufweist. Vorzugsweise enthält diese spezielle Beschichtungsmasse die oben aufgeführten notwendigen Bestandteilen in den nachstehend angegebenen Anteilen :

15 bis 40 Gew.-% polyurethanbildendes Isocyanat,
5 bis 25 Gew.-% des oben näher charakterisierten Kohlenwasserstoffharzes,
0,5 bis 2 Gew.-% Anti-Absetzmittel,
15 bis 35 Gew.-% blättchenförmige Extender,
5 bis 25 Gew.-% farbgebende Pigmente,
1 bis 5 Gew.-% feuchtigkeitsbindendes Mittel, Rest, jedoch wenigstens 5 Gew.-% übliches Lacklösungsmittel.

Auch bei dieser Ausführungsform soll ein gewisser Anteil der farbgebenden Pigmente aus Aluminiumpulver bestehen ; vorzugsweise macht der Anteil an Aluminiumpulver 20 bis 80 Gew.-% der farbgebenden Pigmente aus. Besonders bevorzugt soll der Anteil an polyurethanbildendem Isocyanat 15 bis 30 % des Gesamtgewichtes der Beschichtungsmasse ausmachen. Als polyurethanbildendes Isocyanat kommt für diese Ausführungsform vorzugsweise ein Toluylendiisocyanat mit einem Anteil an Isocyanatgruppen von 5,5 bis 7,5 % bezogen auf das Isocyanatgewicht in Betracht.

Diese « relativ Isocyanat-arme » Ausführungsform der Erfindung eignet sich wegen ihrer guten Elastizität, ihrer hohen Haftfestigkeit auf den verschiedensten Materialien und wegen ihrer Beständigkeit gegen UV-Bestrahlung in hervorragender Weise zum Bautenschutz, insbesondere zum Schutz von Dächern aller Art, wie beispielsweise Eternit-Dächer, mit PU-Hartschaum wärmegedämmte Dächer und dergleichen. Eine weitere Anwendungsart im Dachbereich ist die Schaumbeschichtung, nämlich, die Dachschaumbeschichtung bei sog. Umkehrdächern. Weiterhin eignet sich diese spezielle Beschichtungsmasse für den Schutzanstrich im konstruktiven Ingenieurbau, im Industrie- und Energiebau, im Stahlwasserbau, im Schiffsbau, im Off-shore-Bereich und dergleichen. Sofern mit dieser speziellen Beschichtungsmasse Stahlbeschichtungen vorgenommen werden, empfiehlt sich vorheriges Sandstrahlen (Sa 2,5) ; zur Erzielung eines besonders hochwertigen Korrosionsschutzes kann eine vorherige Grundierung vorgenommen werden. Weiterhin eignet sich diese spezielle Beschichtungsmasse zum Schutz von Beton und zum Korrosionsschutz von Stahlbeton. In jedem Falle wird eine hervorragende Beständigkeit gegen Strahlung, Licht, Wärme und/oder Korrosionseinflüsse gewährleistet.

Eine weitere spezielle Ausführungsform der Erfindung weist einen relativ hohen Gehalt an polyurethanbildendem Isocyanat innerhalb der oben angegebenen Zusammensetzung auf. Für diese weitere spezielle Ausführungsform ist vorzugsweise die nachstehende Zusammensetzung vorgesehen :

40 bis 70 Gew.-% polyurethanbildendes Isocyanat,
5 bis 25 Gew.-% Kohlenwasserstoffharz,
0,2 bis 1 Gew.-% Anti-Absetzmittel,
10 bis 20 Gew.-% blättchenförmige Extender,
2 bis 15 Gew.-% farbgebende Pigmente,
1 bis 4 Gew.-% feuchtigkeitsbindendes Mittel,

Rest, jedoch wenigstens 5 Gew.-% Lacklösungsmittel.

Auch bei der Beschichtungsmasse nach dieser weiteren speziellen Ausführungsform soll wenigstens ein Teil der farbgebenden Pigmente aus Aluminiumpulver bestehen ; vorzugsweise macht der Aluminiumpulver-Anteil 20 bis 80 % des Gesamtgewichtes an farbgebenden Pigmenten aus.

Diese « relativ Isocyanat-reiche » Beschichtungsmasse enthält als polyurethanbildendes Isocyanat vorzugsweise ein Diphenylmethan-Diisocyanat, insbesondere ein Diphenylmethan-Diisocyanat mit einem Anteil an Isocyanatgruppen von 9 bis 12 % bezogen auf das Isocyanatgewicht.

Besonders bevorzugt ist ein Gemisch verschiedener Diphenylmethan-Diisocyanate vorgesehen, die sich hinsichtlich ihres Isocyanatgehaltes unterscheiden. In dieser Hinsicht wurden besonders gute Ergebnisse dann erhalten, wenn der Gesamtgehalt an 40 bis 70 Gew.-% polyurethanbildendem Isocyanat besteht (bezogen auf das Beschichtungsmassen-Gesamtgewicht) aus

a) 30 bis 50 Gew.-% Diphenylmethan-Diisocyanat mit einem Anteil an Isocyanatgruppen von 8 bis 9 %, bezogen auf das Isocyanatgewicht, und
b) 10 bis 20 Gew.-% Diphenylmethan-Diisocyanat mit einem Anteil an Isocyanatgruppen von 14 bis 17 %, bezogen auf das Isocyanatgewicht.

Eine solche, relativ Isocyanat-reiche und verschiedene Diphenylmethan-Diisocyanate enthaltende Beschichtungsmasse ergibt nach Feuchtigkeitszutritt eine leicht schäumende Beschichtung, die speziell bei der Beschichtung und Abdichtung von mit Teerpappe eingedeckten Dächern eine fugenverdichtende Wirkung hat.

Trotz dieser Schaumbildung ist der entstehende Film in hohem Maße porendicht und wasserundurchlässig. Diese spezielle weitere Beschichtungsmasse ist bei Temperaturen von plus 5 bis plus 40 °C Lufttemperatur sowie auch bei hoher Luftfeuchtigkeit, beispielsweise bei einer relativen Luftfeuchtigkeit von über 90 % verarbeitbar. Diese Beschichtungsmasse ist einerseits selbstverlaufend und andererseits dickschichtig applizierbar, so daß beispielsweise mit einem einzigen Auftrag Schichten in einer Schichtdicke bis zu 200 μm und mehr aufgebracht werden können. Bei der Aushärtung bildet diese Masse einen leicht schaumbildenden Film der auch Unebenheiten des Untergrundes ausgleicht und fugenverdichtend wirkt. Auch die aus dieser weiteren speziellen Beschichtungsmasse erhaltene Beschichtung weist eine hohe Porendichtigkeit, hohe Elastizität und hohe Haftfestigkeit auf. Im Hinblick auf die bevorzugte Anwendung, nämlich zum Abdichten von mit Teerpappe abgedeckten Flachdächern enthält diese weitere spezielle Beschichtungsmasse vorzugsweise Lacklösungsmittel auf der Basis von aliphatischen Estern, wie Acetate, Propionate und/oder Butylate, um eine An- und/oder Auflösung der Teerbestandteile in der Teerpappe durch aromatische Lösungsmittelkomponenten zu vermeiden.

Diese weitere spezielle Beschichtungsmasse kann in einem Arbeitsgang bis zu einer Schichtstärke von 1 000 μm aufgebracht werden, ohne daß Haftungsstörungen oder dergleichen auftreten.

Wie bereits ausgeführt, ist diese weitere spezielle Beschichtungsmasse insbesondere zum Abdichten von mit Teerpappe eingedeckten Flachdächern vorgesehen. Hierzu wird die Beschichtungsmasse in einer Schichtdicke von wenigstens 50 μm aufgebracht. Vorzugsweise ist vorgesehen, daß wenigstens 500 g Beschichtungsmasse pro qm Teerpappe aufgebracht werden. Dank der bei der Aushärtung erfolgenden leichten Schaumbildung dringt diese Beschichtungsmasse auch in Fugen, Überlappungsabschnitte und Randabschnitte der Teerpappenbahnen ein und gewährleistet eine über viele Jahre beständige Fugenabdichtung.

**Patentansprüche**

1. Feuchtigkeitshärtende 1-Komponenten-Beschichtungsmasse gekennzeichnet durch einen Gehalt an :

15 bis 70 Gew.-% polyurethanbildendes Isocyanat,
5 bis 25 Gew.-% helles, flüssiges, OH-Gruppenhaltiges, niedermolekulares, aromatisches Kohlenwasserstoffharz,
0,2 bis 2 Gew.-% Anti-Absetzmittel,
10 bis 35 Gew.-% blättchenförmige Extender,
2 bis 25 Gew.-% farbgebende Pigment,
1 bis 5 Gew.-% feuchtigkeitsbindendes Mittel, Rest, jedoch wenigstens 5 Gew.-% übliches Lacklösungsmittel.

2. Feuchtigkeitshärtende 1-Komponenten-Beschichtungsmasse zum Bautenschutz gekennzeichnet durch einen Gehalt an :

15 bis 40 Gew.-% polyurethanbildendes Isocyanat,
5 bis 25 Gew.-% helles, flüssiges, OH-Gruppenhaltiges, niedermolekulares, aromatisches Kohlenwasserstoffharz,
0,5 bis 2 Gew.-% Anti-Absetzmittel,
15 bis 35 Gew.-% blättchenförmige Extender,
5 bis 25 Gew.-% farbgebende Pigmente,
1 bis 5 Gew.-% feuchtigkeitsbindende Mittel, Rest, jedoch wenigstens 5 Gew.-% übliches Lacklösungsmittel.

3. 1-Komponenten-Beschichtungsmasse nach Anspruch 2, dadurch gekennzeichnet, daß der Gehalt an polyurethanbildendem Isocyanat 15 bis 30 % des Gesamtgewichtes der Beschichtungsmasse ausmacht.

4. 1-Komponenten-Beschichtungsmasse nach Anspruch 1 oder 3, dadurch gekennzeichnet, daß das polyurethanbildende Isocyanat einen Anteil an Isocyanatgruppen von 5,5 bis 7,5 % bezogen auf das Isocyanatgewicht aufweist.

5. 1-Komponenten-Beschichtungsmasse nach einem der Ansprüche 2 bis 4, dadurch gekennzeichnet, daß das polyurethanbildende Isocyanat ein Toluylendiisocyanat, gegebenenfalls ein Gemisch verschiedender Toluylendiisocyanat-Isomere ist.

6. 1-Komponenten-Beschichtungsmasse nach einem der Ansprüche 2 bis 5, dadurch gekennzeichnet, daß das Lacklösungsmittel ein Gemisch aromatischer Kohlenwasserstoffe ist.

7. Feuchtigkeitshärtende 1-Komponenten-Beschichtungsmasse zum Abdichten von mit Teerpappe eingedeckten Flachdächern, gekennzeichnet durch einen Gehalt an :

40 bis 70 Gew.-% polyurethanbildendes Isocyanat,
5 bis 25 Gew.-% helles, flüssiges, OH-Gruppenhaltiges, niedermolekulares, aromatisches Kohlenwasserstoffharz,
0,2 bis 1 Gew.-% Anti-Absetzmittel,
10 bis 20 Gew.-% blättchenförmige Extender,
2 bis 15 Gew.-% farbgebende Pigmente,
1 bis 4 Gew.-% feuchtigkeitsbindendes Mittel,

Rest, jedoch wenigstens 5 Gew.-% Lacklösungsmittel.

8. 1-Komponenten-Beschichtungsmasse nach Anspruch 7, dadurch gekennzeichnet, daß das polyurethanbildende Isocyanat einen Anteil an Isocyanatgruppen von 9 bis 12 % bezogen auf das Isocyanatgewicht aufweist.

9. 1-Komponenten-Beschichtungsmasse nach Anspruch 7 oder 8, dadurch gekennzeichnet, daß das polyurethanbildende Isocyanat Diphenylmethan-Diisocyanat ist.

10. 1-Komponenten-Beschichtungsmasse nach Anspruch 7, dadurch gekennzeichnet, daß der Gesamtgehalt an 40 bis 70 Gew.-% polyurethanbildendem Isocyanat besteht — bezogen auf das Beschichtungsmassen-Gesamtgewicht — aus.

a) 30 bis 50 Gew.-% Diphenylmethan-Diisocyanat mit einem Anteil an Isocyanatgruppen von 8 bis 9 %, bezogen auf das Isocyanatgewicht, und

b) 10 bis 20 Gew.-% Diphenylmethan-Diisocyanat mit einem Anteil an Isocyanatgruppen von 14 bis 17 %, bezogen auf das Isocyanatgewicht.

11. 1-Komponenten-Beschichtungsmasse nach einem der Ansprüche 7 bis 10, dadurch gekennzeichnet, daß das als Lacklösungsmittel aliphatische, Estergruppen enthaltende Kohlenwasserstoffe mit einem Molekulargewicht von etwa 100 bis 150 dienen.

12. 1-Komponenten-Beschichtungsmasse nach einem der Ansprüche 1 bis 11, dadurch gekennzeichnet, daß das Kohlenwasserstoffharz — bezogen auf das Harzgewicht — einen Gehalt an OH-Gruppen von 2 bis 4 % aufweist.

13. 1-Komponenten-Beschichtungsmasse nach einem der Ansprüche 1 bis 12, dadurch gekennzeichnet, daß das Kohlenwasserstoffharz bei 25 °C eine Viskosität von 700 bis 2 000 cP aufweist.

14. 1-Komponenten-Beschichtungsmasse nach einem der Ansprüche 1 bis 13, dadurch gekennzeichnet, daß das Kohlenwasserstoffharz eine Helligkeit nach Barrett von 0,5 bis 2 aufweist.

15. 1-Komponenten-Beschichtungsmasse nach einem der Ansprüche 1 bis 14, dadurch gekennzeichnet, daß das Kohlenwasserstoffharz bei 20 °C eine Dichte zwischen 1,02 und 1,2 g/cm³ aufweist.

16. 1-Komponenten-Beschichtungsmasse nach einem der Ansprüche 1 bis 15, dadurch gekennzeichnet, daß ein Teil des farbgebenden Pigmentes, nämlich 20 bis 80 % des Pigment-Gesamtgewichtes aus Aluminiumpulver besteht.

17. Verfahren zur Erzeugung eines Schutzüberzuges auf einem Untergrund, dadurch gekennzeichnet, daß man eine 1-Komponenten-Beschichtungsmasse nach einem der Ansprüche 1 bis 16 auf einem schmutz- und staubfreien Untergrund aufbringt und unter Feuchtigkeitszutritt aus der umgebenden Atmosphäre aushärten läßt.

18. Verfahren nach Anspruch 17, dadurch gekennzeichnet, daß man eine 1-Komponenten-Beschichtungsmasse nach einem der Ansprüche 2 bis 6 in einer Schichtdicke von wenigstens 20 μm aufbringt.

19. Verfahren nach Anspruch 17, dadurch gekennzeichnet, daß man zum Abdichten von mit Teerpappe abgedeckten Flachdächern eine 1-Komponenten-Beschichtungsmasse nach einem der Ansprüche 7 bis 11 in einer Schichtdicke von wenigstens 50 μm aufbringt.

20. Verfahren nach Anspruch 19, dadurch gekennzeichnet, daß man wenigstens 500 g Beschichtungsmasse pro qm Teerpappe aufbringt.

21. Verwendung der 1-Komponenten-Beschichtungsmasse nach einem der Ansprüche 2 bis 6 zum Schutz von Dächern aller Art, zur Beschichtung von Beton, zum Korrosionsschutz von Stahlbeton und/oder zum Anstrich von Stahlteilen.

22. Verwendung der 1-Komponenten-Beschichtungsmasse nach einem der Ansprüche 7 bis 11 zum Abdichten von mit Teerpappe eingedeckten Flachdächern.

**Claims**

1. Moisture-setting one-shot coating material characterised by a content of :

15 to 70 wgt % polyurethane-forming isocyanate,
5 to 25 wgt % clear, liquid, low molecular weight aromatic hydrocarbon resin containing OH groups,
0.2 to 2 wgt % anti-settling agent,
10 to 35 wgt % lamelliform extender,
2 to 25 wgt % coloured pigment,
1 to 5 wgt % moisture-binding agent,

the remainder, but at least 5 wgt %, conventional lacquer solvent.

2. Moisture-setting one-shot coating material for the protection of buildings, characterised by a content of :

5 to 40 wgt % polyurethane-forming isocyanate,
5 to 25 wgt % clear, liquid, low molecular weight aromatic hydrocarbon resin containing OH groups,
0.5 to 2 wgt % anti-settling agent,
15 to 35 wgt % lamelliform extender,
5 to 25 wgt % coloured pigment,
1 to 5 wgt % moisture-binding agent,

the remainder, but at least 5 wgt %, conventional lacquer solvent.

3. One-shot coating material according to claim 2, characterised in that the polyurethane-forming isocyanate content makes up 15 to 30 % of the total weight of the coating material.

4. One-shot coating material according to claim 1 or 3, characterised in that the polyurethane-forming isocyanate contains from 5.5 to 7.5 % of isocyanate groups based on the weight of isocyanate.

5. One-shot coating material according to any of claims 2 to 4, characterised in that the polyurethane-forming isocyanate is a toluene diisocyanate, if necessary a mixture of different toluene diisocyanate isomers.

6. One-shot coating material according to any of claims 2 to 5, characterised in that the lacquer solvent is a mixture of aromatic hydrocarbons.

7. Moisture-setting one-shot coating material for the sealing of flat roofs covered with roofing felt, characterised by a content of :

40 to 70 wgt % polyurethane-forming isocyanate,

5 to 25 wgt % clear, liquid, low molecular weight aromatic hydrocarbon resin containing OH groups,

0.2 to 1 wgt % anti-settling agent,

10 to 20 wgt % lamelliform extender,

2 to 15 wgt % coloured pigment,

1 to 4 wgt % moisture-binding agent,

the remainder, but at least 5 wgt %, lacquer solvent.

8. One-shot coating material according to claim 7, characterised in that the polyurethane-forming isocyanate contains from 9 to 12 % isocyanate groups, based on the weight of isocyanate.

9. One-shot coating material according to claim 7 or 8, characterised in that the polyurethane-forming isocyanate is diphenylmethane diisocyanate.

10. One-shot coating material according to claim 7, characterised in that the total content of 40 to 70 wgt % polyurethane forming isocyanate, based on the total weight of the coating material, comprises

a) 30 to 50 wgt % diphenylmethane diisocyanate with an isocyanate group content of from 8 to 9 %, based on the weight of isocyanate, and

b) 10 to 20 wgt % diphenylmethane diisocyanate with an isocyanate group content of from 14 to 17 %, based on the weight of isocyanate.

11. One-shot coating material according to any of claims 7 to 10, characterised in that hydrocarbon material with a molecular weight of about 100 to 150 containing aliphatic ester groups serves as lacquer solvent.

12. One-shot coating material according to any of claims 1 to 11, characterised in that the hydrocarbon resin has an OH group content of from 2 to 4 % based on the resin weight.

13. One-shot coating material according to any of claims 1 to 12, characterised in that the hydrocarbon resin has a viscosity of from 70 to 2 000 cP at 25 °C.

14. One-shot coating material according to any of claims 1 to 13, characterised in that the hydrocarbon resin has a transparency according to Barrett of from 0.5 to 2.

15. One-shot coating material according to any of claims 1 to 14, characterised in that the hydrocarbon resin has a density between 1.02 and 1.2 grams g cm$^{-3}$ at 20 °C.

16. One-shot coating material according to any of claims 1 to 15, characterised in that a part of the coloured pigment, namely 20 to 80 % of the total pigment weight, comprises aluminium powder.

17. Process for the production of a protective coating on a substrate characterised in that a one-shot coating material according to any of claims 1 to 16 is applied on a dirt- and dust-free substrate and allowed to harden with admission of water from the surrounding atmosphere.

18. Process according to claim 17, characterised in that a one-shot coating material according to any of claims 2 to 6 is applied in a layer thickness of 20 μm.

19. Process according to claim 17, characterised in that, for sealing of a flat roof covered with roofing-felt, a one-shot coating material according to any of claims 7 to 11 is applied in a layer thickness of at least 50 μm.

20. Process according to claim 19, characterised in that at least 500 g of coating material per square metre of roofing felt is applied.

21. Use of the one-shot coating material according to any of claims 2 to 6 for the protection of roofs of all types, for the coating of concrete, for the protection against corrosion of reinforced concrete and/or for the painting of steel parts.

22. Use of the one-shot coating material according to any of claims 7 to 11 for the sealing of flat roofs covered with roofing felt.

**Revendications**

1. Composition de revêtement à composant unique durcissant à l'humidité, caractérisée en ce qu'elle contient :

15 à 70 % en poids d'isocyanate formant un polyuréthanne,

5 à 25 % en poids d'une résine hydrocarbonée aromatique liquide claire de bas poids moléculaire, contenant des groupes OH,

0,2 à 2 % en poids d'un agent anti-sédimentation,

10 à 35 % en poids d'un diluant en lamelles,

2 à 25 % en poids d'un pigment colorant,

1 à 5 % en poids d'un agent fixant l'humidité,

le reste consistant toutefois en un minimum de 5 % en poids de solvant classique pour peinture.

2. Composition de revêtement à composant unique durcissant à l'humidité pour la protection de constructions, caractérisée en ce qu'elle contient :

15 à 40 % en poids d'isocyanate formant un polyuréthanne,

5 à 25 % en poids d'une résine hydrocarbonée aromatique liquide claire de bas poids moléculaire, contenant des groupes OH,

0,5 à 2 % en poids d'un agent anti-sédimentation,

15 à 35 % en poids d'un diluant en lamelles,

5 à 25 % en poids de pigments colorants,

1 à 5 % en poids d'agents fixant l'humidité,

le reste, toutefois avec un minimum de 5 % en poids, consistant en solvants classiques pour peinture.

3. Composition de revêtement à composant unique suivant la revendication 2, caractérisée en ce que la teneur en isocyanate formant un polyuréthanne représente 15 à 30 % du poids total de la composition de revêtement.

4. Composition de revêtement à composant unique suivant la revendication 1 ou 3, caractérisée en ce que l'isocyanate formant un polyuréthanne présente une proportion de groupes isocyanato de 5,5 à 7,5 % par rapport au poids d'isocyanate.

5. Composition de revêtement à composant unique suivant l'une des revendications 2 à 4, caractérisée en ce que l'isocyanate formant un polyuréthanne est un diisocyanatotoluène, éventuellement un mélange de divers isomères de diisocyanatotoluène.

6. Composition de revêtement à composant unique suivant l'une des revendications 2 à 5, caractérisée en ce que le solvant pour peinture est un mélange d'hydrocarbures aromatiques.

7. Composition de revêtement à composant unique durcissant à l'humidité, pour rendre étanches des toitures plates à couverture de carton goudronné, caractérisée en ce qu'elle contient :

40 à 70 % en poids d'isocyanate formant un polyuréthanne,
5 à 25 % en poids de résine hydrocarbonée aromatique liquide claire de bas poids moléculaire, portant des groupes OH,
0,2 à 1 % en poids d'agent anti-sédimentation,
10 à 20 % en poids de diluant en lamelles,
2 à 15 % en poids de pigments colorants,
1 à 4 % en poids d'agent fixant l'humidité,

le reste, toutefois avec un minimum de 5 % en poids, consistant en solvants pour peinture.

8. Composition de revêtement à composant unique suivant la revendication 7, caractérisée en ce que l'isocyanate formant un polyuréthanne présente une proportion en groupes isocyanato de 9 à 12 % par rapport au poids d'isocyanate.

9. Composition de revêtement à composant unique suivant la revendication 7 ou 8, caractérisée en ce que l'isocyanate formant un polyuréthanne est le diisocyanatodiphénylméthane.

10. Composition de revêtement à composant unique suivant la revendication 7, caractérisée en ce que la teneur totale de 40 à 70 % en poids d'isocyanate formant un polyuréthanne consiste — par rapport au poids total de composition de revêtement — en

a) 30 à 50 % en poids de diisocyanatodiphénylméthane avec une proportion de groupes isocyanato de 8 à 9 % par rapport au poids d'isocyanate, et
b) 10 à 20 % en poids de diisocyanatodiphénylméthane avec une proportion en groupes isocyanato de 14 à 17 % par rapport au poids d'isocyanate.

11. Composition de revêtement à composant unique suivant l'une des revendications 7 à 10, caractérisée en ce qu'on utilise comme solvants pour peinture des hydrocarbures aliphatiques porteurs de groupes ester, ayant un poids moléculaire d'environ 100 à 150.

12. Composition de revêtement à composant unique suivant l'une des revendications 1 à 11, caractérisée en ce que la résine hydrocarbonée présente — par rapport au poids de résine — une teneur en groupes OH de 2 à 4 %.

13. Composition de revêtement à composant unique suivant l'une des revendications 1 à 12, caractérisée en ce que la résine hydrocarbonée présente une viscosité à 25 °C de 700 à 2 000 cP.

14. Composition de revêtement à composant unique suivant l'une des revendications 1 à 13, caractérisée en ce que la résine hydrocarbonée présente une clarté selon Barret de 0,5 à 2.

15. Composition de revêtement à composant unique suivant l'une des revendications 1 à 14, caractérisée en ce que la résine hydrocarbonée présente une masse volumique à 20 °C de 1,02 à 1,2 $g/cm^3$.

16. Composition de revêtement à composant unique suivant l'une des revendications 1 à 15, caractérisée en ce qu'une partie du pigment colorant, à savoir 20 à 80 % du poids total de ce pigment, consiste en aluminium en poudre.

17. Procédé pour former un revêtement protecteur sur un substrat, caractérisé en ce qu'on applique une composition de revêtement à composant unique selon l'une des revendications 1 à 16 sur un substrat débarrassé de la crasse et de la poussière et on la laisse durcir au contact de l'humidité de l'atmosphère ambiante.

18. Procédé suivant la revendication 17, caractérisé en ce qu'on applique une composition de revêtement à composant unique suivant l'une des revendications 2 à 6 en une épaisseur de couche d'au moins 20 $\mu$m.

19. Procédé suivant la revendication 17, caractérisé en ce qu'on applique une composition de revêtement à composant unique suivant l'une des revendications 7 à 11 en une épaisseur de couche d'au moins 50 $\mu$m pour rendre étanches des toitures plates recouvertes de carton goudronné.

20. Procédé suivant la revendication 19, caractérisé en ce qu'on applique au moins 500 g de composition de revêtement par $m^2$ de carton goudronné.

21. Utilisation de la composition de revêtement à composant unique suivant l'une des revendications 2 à 6 pour la protection de toitures de toutes sortes, pour le revêtement de béton, pour protéger du béton armé de la corrosion et/ou pour peindre des pièces en acier.

22. Utilisation de la composition de revêtement à composant unique suivant l'une des revendications 7 à 11 pour rendre étanches des toitures plates à couverture de carton goudronné.